# FASCICULE DE BREVET EUROPEEN

(11) **EP 0 628 444 B1**
(45) Date de publication et mention de la délivrance du brevet: **23.12.1998**
(21) Numéro de dépôt: 94401244.2
(22) Date de dépôt: 06.06.1994
(51) Int. Cl.: B60L 11/18

(54) **Circuit de contrôle du courant électrique d'un moteur**
Schaltung zur Steuerung des elektrischen Stroms in einem Motor
Circuit for controlling the electrical current in a motor

(30) Priorité: 09.06.1993 FR 9306907
(43) Date de publication de la demande: 14.12.1994
(73) Titulaire: SOCIETE D'APPLICATIONS GENERALES D'ELECTRICITE ET DE MECANIQUE SAGEM, 75783 Paris Cédex 16 (FR)
(72) Inventeur: Panhaleux, Patrick, F-95800 Courdimanche (FR); Metzelard, Olivier, F-95800 Cergy Saint Christophe (FR)
(74) Mandataire: Bloch, Gérard

(56) Documents cités:
- EP-A- 0 465 381
- GB-A- 2 003 678
- US-A- 4 210 855
- US-A- 4 675 585
- US-A- 5 084 658
- US-A- 5 274 735

## Description

La présente invention concerne un circuit de contrôle du courant électrique d'un moteur, comprenant un capteur de courant relié, à travers des moyens de conversion analogique-numérique, à des moyens de commande d'un organe de contrôle du courant et contrôlés par une unité de contrôle isolée galvaniquement du capteur.

Lorsqu'on veut contrôler, à partir d'un circuit de contrôle accessible à un utilisateur, le courant traversant un moteur électrique porté à un potentiel élevé, il faut assurer la sécurité de l'utilisateur. Ainsi, dans une voiture à propulsion électrique, dans laquelle le moteur est alimenté sous quelques centaines de volts, le circuit de contrôle, qui est un microprocesseur contrôlant la vitesse de la voiture, est par contre alimenté en basse tension puisqu'il est accessible à l'utilisateur.

Le microprocesseur reçoit, au travers de deux circuits d'isolement, un signal analogique d'un capteur du courant dans le circuit du moteur, généralement un shunt ou un capteur à effet Hall, convertit sous forme numérique ce signal analogique et, par comparaison avec un signal de consigne affiché en entrée par le conducteur, détermine un signal de réglage qui, à son tour, est converti sous forme analogique pour être transmis, à travers un autre circuit d'isolement, à un organe de réglage du courant du moteur, généralement un transistor de puissance (voir US-A-5 084 658).

Il faut donc utiliser plusieurs circuits d'isolement;

De plus, si l'on veut limiter la distorsion des signaux analogiques qu'ils transmettent, il faut utiliser des circuits coûteux et/ou encombrants, tels que amplificateurs à isolement, ou transformateur s'il s'agit de courant alternatif.

Un capteur de courant à effet Hall comporte bien une sortie isolée, mais il est peu précis, coûteux et dérive en température.

La présente invention vise à proposer une solution intéressante.

A cet effet, elle concerne un circuit de contrôle du type mentionné ci-dessus, caractérisé par le fait que le capteur de courant comporte une résistance en série avec le moteur et que les moyens de commande sont reliés galvaniquement au capteur à travers les moyens de conversion et isolés galvaniquement de l'unité de contrôle.

Ainsi, on déporte le circuit de commande dans le circuit au potentiel du moteur. On dispose alors, dans le circuit du moteur, de tous les moyens nécessaires pour assurer la commande du contrôle du courant moteur. Il suffit donc d'un seul circuit d'isolement qui, en outre, n'est pas coûteux puisqu'il est disposé sur une liaison numérique entre l'unité de contrôle et les moyens de commande.

Avantageusement, un microprocesseur comporte les moyens de conversion et les moyens de commande.

On dispose ainsi d'un composant peu coûteux et de faible volume pour assurer localement le contrôle du courant.

Avantageusement toujours, l'unité de contrôle comporte un microprocesseur relié à des moyens de consigne pour transmettre un signal de consigne aux moyens de commande.

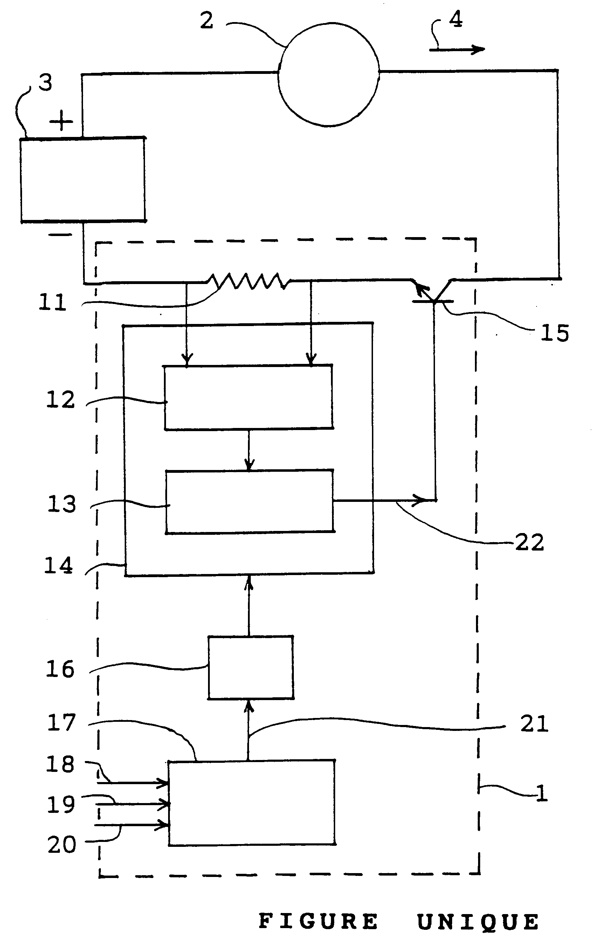

L'invention sera mieux comprise à l'aide de la description suivante de la forme de réalisation préférée du circuit de contrôle de l'invention, en référence à la figure unique du dessin annexé qui en est une représentation schématique.

Le circuit de contrôle de l'invention, délimité par un cadre en ligne en pointillés 1, contrôle, dans cet exemple, le moteur électrique 2 d'une voîture à propulsion électrique alimenté par une batterie 3 fournissant un courant 4.

Le circuit de contrôle 1 comporte une résistance étalon 11 de faible valeur, ici en alliage de la marque protégée Manganine, formant shunt de mesure de courant, en série avec le moteur 2, donc parcourue par le courant 4. La résistance 11 est reliée par ses deux bornes, et par une chaîne d'amplification, à un convertisseur analogique-numérique 12 relié en sortie à un bloc de calcul 13. Le convertisseur 12 et le bloc de calcul 13 appartiennent, ici, à un même microprocesseur 14. Le bloc de calcul 13 commande la base d'un transistor de puissance 15 monté en série avec le moteur 2, tandis qu'il est relié en entrée, à travers un photo-coupleur 16, à une unité de contrôle 17 comportant un autre microprocesseur, non représenté.

L'unité de contrôle 17 comporte ici trois entrées de consigne 18, 19 et 20 respectivement reliées à des capteurs, non représentés, de position des pédales de freinage et d'accélération et à un levier de commande de sens de marche.

Le fonctionnement du circuit de contrôle va maintenant être expliqué.

Le conducteur de la voiture ayant initialement choisi un sens de marche par le levier 20 et, par exemple, appuyant sur la pédale d'accélération alors que la voiture avance déjà, l'unité de contrôle 17 élabore, au moyen d'une table de conversion stockée localement, un signal de consigne 21 fonction de l'état des entrées 18-20.

Le signal de consigne 21 est, dans cet exemple, un nombre proportionnel à l'accélération souhaitée, son signe indiquant s'il s'agit d'une accélération positive ou d'un freinage. Il pourrait tout aussi bien représenter une vitesse souhaitée.

Le signal de consigne 21 parvient, à travers le photocoupleur 16, au bloc de calcul 13. Ce dernier détermine alors une valeur de consigne pour le courant 4, qui est égale à la valeur fournie par le convertisseur 12 et modifiée par le signal de consigne 21.

Le bloc de calcul 13 engendre un signal de commande 22 correspondant à la valeur de consigne du courant 4, qui commande le transistor 15. Bien qu'elle ne soit pas représentée, il peut être prévu une interface de mise en forme en amont de la base du transistor 15. En particulier, on peut prévoir d'alimenter sa base à partir de la batterie 3 à travers un autre photocoupleur d'isolation commandé par le signal de commande 22.

Le bloc de calcul 13 reçoit du convertisseur 12 la valeur du courant 4 traversant la résistance 11 et asservit ce courant 4 à la valeur de consigne en modifiant de façon appropriée le signal de commande 22, au moyen d'un logiciel stocké localement.

## Revendications

1. Circuit de contrôle du courant électrique (4) d'un moteur (2), comprenant un capteur de courant (11) relié, à travers des moyens de conversion analogique-numérique (12), à des moyens de commande (13) d'un organe (15) de contrôle du courant (4) contrôlés par une unité de contrôle (17) isolée galvaniquement du capteur, circuit caractérisé par le fait que le capteur de courant (11) comporte une résistance en série avec le moteur (2) et que les moyens de commande (13) sont reliés galvaniquement au capteur (11) à travers des moyens de conversion (12) et isolés galvaniquement de l'unité de contrôle (17).

2. Circuit selon la revendication 1, dans lequel les moyens de commande (13) sont reliés galvaniquement à l'organe de contrôle (15).

3. Circuit selon l'une des revendications 1 et 2, dans lequel un microprocesseur (14) comporte les moyens de conversion (12) et les moyens de commande (13).

4. Circuit selon l'une des revendications 1 à 3, dans lequel l'unité de contrôle (17) comporte un microprocesseur relié à des moyens de consigne (18-20) pour transmettre un signal de consigne (21) aux moyens de commande (13).

## Claims

1. Circuit for controlling the electrical current (4) in a motor (2), comprising a current pick-up (11) connected, via analogue-to-digital conversion means (12), to means (13) for controlling a member (15) for controlling the current, which means are controlled by a control unit (17) isolated galvanically from the pick-up, said circuit being characterised by the fact that the current pick-up ((11) comprises a resistor in series with the motor (2) and that the controlling means (13) are connected galvanically to the pick-up (11) via conversion means (12) and isolated galvanically from the control unit (17).

2. Circuit according to Claim 1, in which the controlling means (13) are connected galvanically to the control member (15).

3. Circuit according to one of Claims 1 and 2, in which a microprocessor (14) comprises the conversion means (12) and the controlling means (13).

4. Circuit according to one of Claims 1 to 3, in which the control unit (17) comprises a microprocessor connected to reference means (18-20) for transmitting a reference signal (21) to the controlling means (13).

## Patentansprüche

1. Schaltung zur Steuerung des elektrischen Stromes (4) eines Motors (2), die einen Stromaufnehmer (11) aufweist, der über eine Analog/Digitalwandlereinrichtung (12) an eine Steuereinrichtung (13) eines Organs (15) zur Steuerung des Stromes (4) angeschlossen ist, wobei die Steuereinrichtung (13) von einer Steuereinheit (17) gesteuert ist, die von dem Aufnehmer galvanisch getrennt ist,
dadurch gekennzeichnet,
daß der Stromaufnehmer (11) einen Widerstand in Reihe mit dem Motor (2) aufweist
und daß die Steuereinrichtung (13) mit dem Aufnehmer (11) über eine Wandlereinrichtung (12) galvanisch verbunden und von der Steuereinheit (17) galvanisch getrennt ist.

2. Schaltung nach Anspruch 1,
bei der die Steuereinrichtung (13) mit dem Steuerorgan (15) galvanisch verbunden ist.

3. Schaltung nach einem der Ansprüche 1 und 2,
bei der ein Mikroprozessor (14) die Wandlereinrichtung (12) und die Steuereinrichtung (13) aufweist.

4. Schaltung nach einem der Ansprüche 1 bis 3,
bei der die Steuereinheit (17) einen Mikroprozessor aufweist, der an eine Einstelleinrichtung (18 - 20) angeschlossen ist, um zu der Steuereinrichtung (13) ein Einstellsignal (21) zu übertragen.
